# FASCICULE DE BREVET EUROPEEN

(11) **EP 3 280 946 B1**
(45) Date de publication et mention de la délivrance du brevet: **24.11.2021**
(21) Numéro de dépôt: 16721871.8
(22) Date de dépôt: 05.04.2016
(51) Int. Cl.: F17C 5/00, F17C 5/06

(54) **STATION ET PROCÉDÉ DE REMPLISSAGE D'UN RÉSERVOIR AVEC UN GAZ CARBURANT**
STATION UND VERFAHREN ZUR TANKBEFÜLLUNG MIT EINEM FLÜSSIGGAS
STATION AND METHOD FOR FILLING A TANK WITH A FUEL GAS

(30) Priorité: 10.04.2015 FR 1553138
(43) Date de publication de la demande: 14.02.2018
(73) Titulaire: L'Air Liquide Société Anonyme pour l'Etude et l'Exploitation des Procédés Georges Claude, 75007 Paris (FR)
(72) Inventeur: ALLIDIERES, Laurent, 38410 Saint Martin D'uriage (FR); FLYNN, Julie, 38210 Montaud (FR); DEVILLIERS, Clémence, 38330 Montbonnot-Saint-Martin (FR); FRANCOIS, Thibaut, 38120 Fontanil Cornillon (FR)
(74) Mandataire: Air Liquide
(86) Numéro de dépôt international: PCT/FR2016/050772
(87) Numéro de publication internationale: WO 2016/162626

(56) Documents cités:
- WO-A1-2014/094070
- DE-C1- 19 843 669
- DE-U1- 29 816 811
- US-A1- 2002 129 867
- US-A1- 2004 188 449

## Description

La présente invention concerne une station et un procédé de remplissage de réservoirs avec du gaz sous pression.

L'invention concerne plus particulièrement une station de remplissage d'un réservoir avec un gaz carburant sous pression, notamment de l'hydrogène, comprenant au moins un stockage source de gaz carburant et un circuit de transfert de gaz ayant une première extrémité amont reliée au(x) stockage(s) source et une seconde extrémité aval destinée à être reliée fluidiquement au réservoir à remplir, le circuit de transfert de gaz comprenant au moins une vanne de contrôle du transfert de gaz du stockage source vers le réservoir.

L'invention s'applique en particulier aux remplissages de réservoirs d'hydrogène sous pression.

Les stations de remplissage d'hydrogène gazeux pour véhicules à pile à combustible doivent permettre de remplir des réservoirs en quelques minutes (3 à 5 minutes par exemple pour des réservoirs embarqués à une pression de 700 bar). Les quantités de gaz à transférer (par exemple 5 à 7 kg) dans cet intervalle de temps empêchent d'effectuer le remplissage directement depuis un compresseur haute pression, sauf à investir dans des compresseurs de très forte puissance électrique instantanée ayant une pression d'aspiration importante (par exemple supérieure à 100 bar). Le transfert est donc généralement effectué à partir de stockages à plus haute pression et intégrés dans la station en effectuant des équilibrages successifs avec une ou plusieurs capacités installées à poste fixe sur la station (remplissage dit « en cascade »).

Les systèmes connus nécessitent cependant des stockages source relativement importants en nombre et/ou en volume.

De plus, cette solution implique d'installer dans la station d'importantes quantités de stockage à des pressions élevées puisque seule une partie est effectivement transférée dans le réservoir du véhicule par équilibrage (résiduel important). De plus, pour réaliser un remplissage complet du réservoir en minimisant le nombre de stockages source, il est nécessaire de réaliser plusieurs équilibrages successifs à des pressions de plus en plus élevées. Ceci nécessite l'installation d'un système de vannes complexe.

Il est connu de prévoir des réservoirs gaz sous pression comprenant en leur sein un volume de liquide qui est diminué à mesure que le réservoir est rempli. Cette solution, décrite par exemple dans les documents EP2438346A1 ou JP2005273811A2 US2011048576A, est prévue pour éviter l'échauffement du réservoir rempli au-dessus d'un seuil déterminé. Le document DE19843669 décrit également une station de remplissage.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce que le au moins un stockage source comprend une paroi extérieure rigide et une paroi souple d'étanchéité agencée à l'intérieur du volume délimité par la paroi extérieure rigide, la paroi souple délimitant un volume de stockage pour le gaz carburant, la première extrémité amont du circuit étant reliée au volume de stockage délimité par la paroi souple, le volume situé entre la paroi souple et la paroi extérieure étant relié à un circuit de transfert de liquide dans le stockage source, pour remplir ou soutirer du liquide dans le stockage source et contrôler la pression dans le stockage lors du remplissage et/ou du soutirage de gaz carburant dans la paroi d'étanchéité.

L'utilisation de tels stockages de gaz dans la station de remplissage procure de nombreux avantages.

Cette structure permet de limiter le nombre de stockage source nécessaire sur une station de remplissage en optimisant leur niveau d'utilisation. La nécessité d'effectuer des remplissages par cascade peut même être supprimée.

Le système permet une séparation physique entre l'hydrogène et le fluide de compression à l'aide d'une vessie souple. Il permet aussi de faire des remplissages isobariques du coté de la station, donc de limiter les variations de pression du ou des stockages de la station. Ceci peut le cas échéant augmenter sa durée de vie.

Le transfert de gaz peut être réalisé à pression constante dans le stockage source, le gaz transféré peut être maintenu ainsi à une température constante. Ceci permet de simplifier la conception d'un éventuel échangeur de chaleur pour refroidir le gaz en aval sur le circuit.

Par ailleurs, des modes de réalisation de l'invention peuvent comporter l'une ou plusieurs des caractéristiques suivantes :
- le circuit de transfert de liquide comprend un réservoir de liquide et une pompe agencés pour transférer du liquide du réservoir de liquide vers le stockage source,
- le circuit de transfert de liquide comprend une conduite de sortie munie d'un système de vanne(s) et reliée d'une part au stockage source et, d'autre part, au réservoir de liquide, pour évacuer du liquide et éventuellement du gaz du stockage vers le réservoir de liquide,
- la conduite de sortie comprend au moins une vanne et notamment un régulateur de pression configuré pour former un système d'évent et de maintien d'un différentiel de pression déterminé entre le réservoir de liquide et le stockage source,
- la paroi d'étanchéité délimite dans le stockage source un volume de stockage pour du gaz carburant compris entre 0,08 et 0,6m³ et de préférence compris entre 0,08m³ et 0,30m³(entre 75 litres et 300litres notamment)
- le liquide transféré par le circuit de transfert de liquide est au moins l'un parmi : de l'eau, de l'eau additionnée d'un composant antigel, de l'huile (notamment minérale ou silicone),
- le circuit de transfert de gaz comprend un adsorbant ou séparateur pour purifier le gaz transféré vers le réservoir d'éventuels pollutions notamment d'espèce(s) chimique(s) provenant du liquide contenu dans le stockage (3) source,
- la station comprend un compresseur ou respectivement une pompe associée à un vaporiseur, relié au circuit de transfert de gaz et en particulier au stockage source, pour permettre le remplissage du stockage source en gaz à partir d'une source de gaz carburant, respectivement à partir d'une source de gaz carburant liquéfié, reliée audit compresseur,
- la station comprend plusieurs stockages source de gaz carburant raccordés en parallèle à la première extrémité amont du circuit de transfert de gaz via un système de vannes respectives, les stockages source comprenant chacun une paroi extérieure rigide et une paroi d'étanchéité souple agencée à l'intérieur du volume délimité par la paroi extérieure rigide, la paroi d'étanchéité de chaque stockage délimitant un volume de stockage pour gaz carburant relié à la première extrémité du circuit de transfert de gaz, le volume situé entre la paroi souple et la paroi extérieure de chacun des stockages source étant relié à un circuit de transfert de liquide dans le stockage source pour remplir ou soutirer du liquide dans les stockages et contrôler la pression dans les stockage lors du remplissage et/ou du soutirage de gaz dans la paroi d'étanchéité des stockages,
- la station comprend un réservoir de liquide et une pompe reliés au circuit de transfert de liquide pour permettre le transfert de liquide du réservoir (6) de liquide vers le stockage avec un débit déterminé,
- le circuit de transfert de gaz comprend un échangeur de chaleur de refroidissement sélectif du gaz transféré vers le réservoir,
- le compresseur est relié au circuit de transfert de gaz et notamment à la seconde extrémité dudit circuit sans passer par le au moins un stockage source pour permettre le remplissage direct d'un réservoir,
- le au moins un stockage source est disposé verticalement et comprend un orifice inférieure reliant la première extrémité du circuit de transfert de gaz au volume délimité par l'enveloppe souple et un orifice supérieur reliant le volume situé entre la paroi souple et la paroi extérieure au circuit de transfert de liquide,
- le réservoir de liquide comporte un évent de dégazage en cas de pression au-dessus d'un seuil déterminé,

L'invention concerne également un procédé de remplissage d'un réservoir avec un gaz carburant sous pression, notamment de l'hydrogène, au moyen d'une station de remplissage comprenant au moins un stockage source de gaz carburant et un circuit de transfert de gaz ayant une première extrémité amont reliée au stockage source et une seconde extrémité reliée fluidiquement au réservoir à remplir, le circuit de transfert de gaz comprenant au moins une vanne de contrôle du transfert de gaz du stockage source vers le réservoir, le au moins un stockage source comprenant une paroi extérieure rigide et une paroi souple d'étanchéité agencée à l'intérieur du volume délimité par la paroi extérieure rigide, la paroi d'étanchéité délimitant un volume de stockage pour gaz carburant, la première extrémité amont du circuit étant reliée au volume de stockage délimité par la paroi souple, le volume situé entre la paroi souple et la paroi extérieure étant relié à un circuit de transfert de liquide dans le stockage source pour remplir ou soutirer du liquide dans le stockage, le procédé comprenant une étape de contrôle de la pression dans le stockage lors du remplissage et/ou du soutirage de gaz carburant dans la paroi d'étanchéité par injection ou retrait simultané de liquide dans le au moins un stockage source.

Selon d'autres particularités possibles :
- le procédé comporte une étape de transfert de gaz du au moins un stockage source vers le réservoir et, simultanément à ce transfert de gaz, du liquide est injecté dans le au moins un stockage source pour limiter ou empêcher la chute de pression dans ledit stockage source,
- le procédé comporte une étape de remplissage du au moins un stockage source par transfert de gaz à partir d'une source de gaz carburant sous pression et, simultanément à ce transfert de gaz, du liquide est soutiré dans le au moins un stockage source pour limiter ou empêcher l'augmentation de pression dans ledit stockage source,
- le au moins un stockage source contient du gaz carburant à une pression comprise entre 200 et 1000 bar et de préférence entre 300 et 900bar.

L'invention peut concerner également tout dispositif ou procédé alternatif comprenant toute combinaison des caractéristiques ci-dessus ou ci-dessous, tout en restant dans le cadre des revendications.

D'autres particularités et avantages apparaîtront à la lecture de la description ci-après, faite en référence aux figures dans lesquelles :
- la figure 1 représente une vue schématique et partielle d'une station de remplissage illustrant la structure et le fonctionnement d'un premier exemple de réalisation de l'invention,
- la figure 2 représente une vue similaire à celle de la figure 1 illustrant un second exemple de réalisation de l'invention.

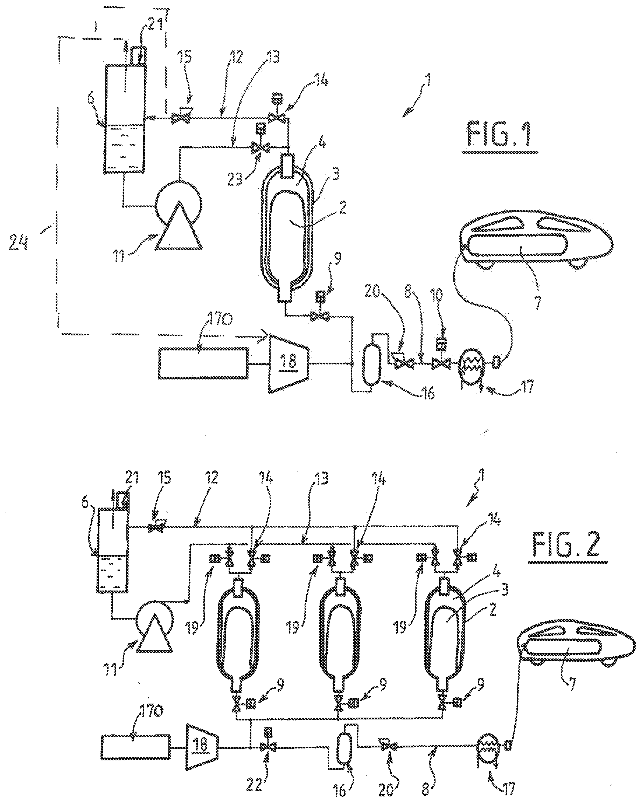

L'exemple de station 1 de remplissage représentée à la figure 1 comprend classiquement un stockage 3 source de gaz carburant (tel que de l'hydrogène) et un circuit 8 de transfert de gaz. Le circuit 8 de transfert de gaz a une première extrémité amont reliée au stockage 3 source et une seconde extrémité aval destinée à être reliée fluidiquement au réservoir 7 à remplir (par exemple via un système de connexion rapide au bout d'un flexible).

Le circuit 8 de transfert de gaz comprend au moins une vanne 9, 10 de contrôle du transfert de gaz du stockage 3 source vers le réservoir 7. Par exemple, le circuit peut comporter entre le stockage 3 source et l'extrémité aval, une première vanne 9 (par exemple piloté), un détendeur 20 puis une seconde vanne.

Selon une particularité avantageuse, le stockage 3 source comprend une paroi extérieure rigide, par exemple composite, et une paroi 2 souple d'étanchéité agencée à l'intérieur du volume délimité par la paroi extérieure rigide.

La paroi 2 souple forme ainsi une vessie souple délimitant un volume étanche de stockage pour le gaz carburant.

La première extrémité amont du circuit 8 est reliée au volume de stockage délimité par la paroi 2 souple. Le volume situé entre la paroi 2 souple et la paroi extérieure est relié à un circuit 12, 13 de transfert de liquide dans le stockage 3 source, pour remplir ou soutirer du liquide dans le stockage 3 source et ainsi contrôler la pression dans le stockage 3 lors du remplissage et/ou du soutirage de gaz carburant dans la paroi 2 d'étanchéité.

Sans que ce soit limitatif pour autant, la structure du stockage 3 source peut être conforme à celle décrite dans le document EP2438346A1. En particulier, la paroi 2 souple étanche peut être reliée à la paroi rigide uniquement au niveau d'un goulot ou orifice du stockage 3 source. De même, cette paroi 2 souple d'étanchéité peut être montée à demeure dans la paroi rigide ou peut être amovible, notamment pour l'inspection et le cas échéant permettre son remplacement. Par exemple, la paroi rigide du stockage 3 source est en matériau composite. C'est-à-dire que ce stockage source peut être un réservoir de type IV avec un liner intermédiaire positionné entre la paroi 2 souple (vessie) et la paroi rigide du stockage.

Bien entendu, toute autre structure appropriée peut être envisagée. De même, la paroi souple peut être remplacée par tout autre système de partition mobile ou déformable équivalent permettant de séparer le gaz du liquide.

De cette façon, le remplissage d'un réservoir 7 de véhicule peut être réalisé de façon isobarique, en injectant un fluide non compressible dans l'espace entre la paroi 2 souple contenant le gaz et la paroi rigide.

Le liquide est par exemple de l'eau (additionnée ou non d'antigel), de l'huile (minérale, silicone ou autre) ou tout autre liquide ou fluide approprié.

De préférence, le volume nécessaire de stockage 3 source est d'un ordre de grandeur égal au volume du réservoir 7 à remplir. Avantageusement, le stockage 3 source de la station 1 aura un volume légèrement supérieur au volume du réservoir 7 afin d'éviter d'écraser trop la vessie (paroi souple 2) lors du transfert de gaz en fin de remplissage.

Le débit de gaz transféré peut être contrôlé uniquement par le débit de liquide introduit dans le stockage 3 source. Ceci peut permettre de s'affranchir d'une vanne de contrôle de débit de remplissage.

Comme illustré à la figure 1, le circuit 12, 13 de transfert de liquide peut comprendre un réservoir 6 de liquide et une pompe 11 agencés pour permettre le transfert de liquide du réservoir 6 de liquide vers le stockage 3 source lorsque cela est nécessaire (notamment avec un débit déterminé).

Comme illustré, le circuit 12, 13 de transfert de liquide peut comprendre une première conduite 13 munie de la pompe 11 (et de préférence une vanne 23) pour transférer du liquide du réservoir 6 de liquide vers le stockage 3 et une seconde conduite 12 sortie pour permettre le transfert du liquide et éventuellement du gaz du stockage 3 vers le réservoir 6 de liquide. La conduite 12 de sortie peut être munie d'un système de vanne(s) 14, 15, par exemple une première vanne 14 en série avec un régulateur de pression ou un clapet de surpression.

Ceci forme un système d'évent et de maintien d'un différentiel de pression déterminé entre le réservoir 6 de liquide et le stockage 3 source. En particulier, le réservoir 6 peut être à la pression atmosphérique ambiante.

Ainsi, dans le cas du gaz carburant hydrogène, l'hydrogène de perméation ayant migré au travers la vessie 2 et dissous dans le liquide peut être collecté dans le stockage 3 source et dégazé de manière contrôlé et centralisé via un évent 21. Ce gaz peut si besoin être récupéré, éventuellement séché et déshuilé, et re-comprimé et réutilisé, par exemple réinjecté dans le stockage 3 source.

Comme schématisé via la ou les lignes 24 en pointillées, le gaz récupéré peut être recyclé (utilisé) à l'aspiration du compresseur 18. Ceci augmente l'efficacité et diminue les pertes.

La station 1 peut comprendre un compresseur 18 et/ou respectivement une pompe associée à un vaporiseur pour remplir le stockage 3 source.

Ce compresseur 18 (ou pompe avec vaporiseur alimenté en gaz liquéfié) peut être relié au circuit 8 de transfert de gaz (par exemple via une vanne 22, cf. figure 2) et en particulier au stockage 3 source, pour permettre le remplissage du stockage 3 source en gaz sous pression.

Pour remplir en gaz carburant le volume délimité par la paroi 2 souple de l'hydrogène fourni par la source 170 peut être comprimé/vaporisé à une pression déterminée, par exemple à une pression supérieure à 900 bar.

Cette pression peut être contrôlée par le régulateur de pression 15 de la conduite 12 de sortie et/ou via l'autre vanne 14 de cette conduite 12.

Lors du remplissage du stockage 3, le liquide non compressible contenu dans ce dernier est alors évacué vers le réservoir 6 de liquide.

Le régulateur 15 de pression de la conduite de sortie peut être réglé à une pression supérieure à la pression du détendeur 20 de pression disposé en aval sur le circuit 8 de transfert.

Lorsque le stockage 3 source est rempli ou contient suffisamment de gaz carburant, le remplissage d'un réservoir 7 peut être réalisé.

Lors d'un tel remplissage, une vanne 14 de la conduite 12 de sortie est fermée tandis que la vanne 23 de la conduite 13 comprenant la pompe 11 est ouverte. La pompe 11 peut être mise en route.

La paroi souple 2 se vide alors de son gaz, ce gaz est transféré dans le réservoir 7 via le circuit 8 de transfert (vannes aval 9 et 10 ouvertes).

Un régulateur de pression 20 situé dans le circuit 8 de transfert peut être prévu pour maintenir la pression dans la paroi 2 souple constante à une valeur légèrement inférieur à la pression fixée par le régulateur 15 (inférieure à 900 bar par exemple).

Comme illustré, le circuit 8 de transfert (la conduite raccordée au réservoir 7 à remplir) peut comporter un échangeur 17 de chaleur pour refroidir le gaz et ainsi compenser au moins en partie l'augmentation de température liée à la compression adiabatique dans le réservoir 7. Ceci peut contribuer à permettre un remplissage en moins de 5 minutes.

De plus, et comme représenté à la figure 1, un réservoir ou séparateur 16 (adsorbant ou autre) peut être prévu dans le circuit 8 de transfert pour supprimer d'éventuels polluants dans le gaz avant son entrée dans le réservoir 7.

La figure 2 illustre une variante de réalisation qui se distingue de celle de la figure 1 uniquement en ce que la station 1 comprend plusieurs (trois) stockages 3 source. Les stockages 3 source sont raccordés en parallèle d'une part à la première extrémité du circuit 8 de transfert de gaz (via des vannes respectives 9 et, d'autre part, au circuit 12, 13 de transfert de liquide (via des vannes respectives 14, 19).

Les stockages 3 source peuvent être remplis successivement et peuvent être utilisés successivement pour des remplissages successifs (en cascade notamment). Cette pluralité de stockages 3 source peut notamment être prévue ou utilisée lorsque le réservoir 7 à remplir a un volume supérieur à un stockage 3 source.

De plus, pour optimiser l'énergie de remplissage, les stockages 3 source peuvent être remplis en gaz avec des pressions différentes (par exemple 200, 500 et 900 bar). Dans ce cas, les régulateurs de pression 15 et 20 sont de préférence du type à pression pilotée (valeur de pression réglable). Ainsi, lors du remplissage et de la vidange d'un premier stockage 3 source, la pression de pilotage (régulateurs 20 et 15) peut être fixée à une première valeur basse (par exemple de l'ordre de 200 bar), puis une seconde pression intermédiaire (par exemple 500 bar) pour un second stockage 3 source et enfin une troisième pression élevée (par exemple 900 bar) pour le troisième stockage 3 source.

Pour des raisons pratiques la pompe 11 peut être utilisée ou dédiée à la vidange d'un stockage 3 source déterminé. Par exemple, dans ce cas, une pompe 11 peut être conçue pour une première pression de service déterminée (par exemple 200 bar pour la vidange d'un premier stockage source), une autre pompe peut être prévue pour une seconde pression de service du second stockage 3 source (par exemple 500 bar) et une troisième pompe pour une troisième pression pour le troisième stockage 3 source (par exemple 900 bar).

Comme illustré, de préférence le ou les stockages 3 source sont orientés et placés verticalement (interface de gaz en bas et interface de liquide en haut). Cet agencement permet de collecter dans le circuit 12, 13 hydraulique l'hydrogène qui diffuse à travers la paroi 2 souple pour le dégazer dans le réservoir 6.

Le tableau ci-dessous illustre des exemples comparatifs entre la solution antérieure dans les colonnes de gauche (plusieurs stockages tampon classiques utilisés en cascade) et avec la solution selon l'invention dans les colonnes de droite (un stockage tampon selon l'invention).

Les quatre lignes illustrent respectivement quatre exemples de consommation d'hydrogène que la station doit pouvoir assurer (en kg/jour et le nombre de remplissages successifs) pour remplir des réservoirs remplis à 700bar.

La seconde colonne illustre le nombre, le volume (en litre (l)) et la pression (en bar) des stockages 3 sources utilisés pour ces contraintes. La troisième colonne indique la quantité de gaz stocké dans ce cas dans les stockages 3 tampons (en Nm³).

Les quatrième et cinquième colonnes correspondent aux deuxième et troisième colonnes pour la solution selon l'invention.

Enfin la dernière colonne indique les écarts (en pourcentage) de quantité de gaz stockée dans les stockages 3 sources selon l'invention par rapport à la solution classique.

On constate aisément que l'invention permet donc de réduire d'environ 50% les quantités de gaz stockées au sein de la station par rapport à la solution classique. Ceci confère des avantages en terme de coût et de sécurité.

Par exemple, pour une station assurant trois remplissage successifs (100kg d'hydrogène rempli par jour), au lieu de mobiliser deux stockages source de 800 litres et 1060Nm³ d'hydrogène, l'invention peut répondre à cette demande avec un unique stockage tampon plus petit (500l) avec une quantité de gaz stocké moindre (450m³).

De plus, l'invention permet de diminuer la taille du deuxième étage de compression nécessaire car ce deuxième étage est souvent utilisé aussi pour compléter les pleins de réservoirs à remplir lorsque ceux-ci sont effectués par équilibrage classique de pression.

Ceci peut générer une économie substantielle par station (compensant par exemple largement le surcoût pour la pompe 11).

Bien entendu, l'invention peut s'appliquer au remplissage d'autres gaz que l'hydrogène, par exemple, du gaz naturel, du méthane ou autre (et à des pressions différentes).

**Le tableau suivant de comparaison des tailles et nombre de stockage source dans le cas de remplissage de réservoirs d'hydrogène :**

| **Station** | **Remplissage classique** | | **Remplissage selon l'invention** | | **Ecart des quantités de gaz stockées** |
|---|---|---|---|---|---|
| | **Capacité** | **Gaz stocké (Nm3)** | **Capacité** | **Gaz stocké (Nm3)** | |
| 100kg/ jour réalisant trois remplissages consécutifs | 1× 800l à 450 bar + 1×800l à 875bar | 1060 | 1×500l à 900 bar | 450 | **-58%** |
| 400kg/j réalisant huit remplissages consécutifs | 4×800l à 450 bar + 800l à 875bar | 2140 | 1×1360l à 900 bar | 1224 | **-43%** |
| 100kg/ jour réalisant deux fois trois remplissages consécutifs | 1×1300l à 450 bar + 1x 1300l à 875bar | 1722 | 1×1020l à 900 bar | 918 | **-47%** |
| 400kg/j réalisant deux fois huit remplissages consécutifs | 8×800l à 450bar + 2×800l à 875bar | 4280 | 1×2720l à 900 bar | 2448 | **-43%** |

Ainsi, tout en étant de structure simple et peu coûteuse, l'invention procure de nombreux avantages. Elle permet d'utiliser moins de stockages 3 sources sur la station 1 et ayant des volumes en eau inférieurs à ceux d'une station classique.

De plus, les stockages 3 source de la station peuvent être remplis et soutirés de façon isobare. Ceci diminue les cycles de fatigue mécanique de ces derniers.

Le débit de gaz de diffusion peut de plus être collecté dans un endroit déterminé.

Le débit de remplissage des réservoirs 1 peut être contrôlé par la vitesse de la pompe 11.

En outre, le gaz qui sort des stockages 3 source reste à température constante ou quasi constante. Ceci simplifie le dimensionnement d'un échangeur de chaleur 17 de refroidissement aval.

## Revendications

1. Station (1) de remplissage d'un réservoir (7) avec un gaz carburant sous pression, notamment de l'hydrogène, comprenant au moins un stockage (3) source de gaz carburant et un circuit (8) de transfert de gaz ayant une première extrémité amont reliée au(x) stockage(s) (3) source et une seconde extrémité aval destinée à être reliée fluidiquement au réservoir (7) à remplir, le circuit (8) de transfert de gaz comprenant au moins une vanne (9, 10) de contrôle du transfert de gaz du stockage (3) source vers le réservoir, le au moins un stockage (3) source comprenant une paroi extérieure rigide et une paroi (2) souple d'étanchéité agencée à l'intérieur du volume délimité par la paroi extérieure rigide, la paroi (2) souple délimitant un volume de stockage pour le gaz carburant, la première extrémité amont du circuit (8) étant reliée au volume de stockage délimité par la paroi (2) souple, le volume situé entre la paroi (2) souple et la paroi extérieure étant relié à un circuit (12, 13) de transfert de liquide dans le stockage (3) source, pour remplir ou soutirer du liquide dans le stockage (3) source et contrôler la pression dans le stockage (3) lors du remplissage et/ou du soutirage de gaz carburant dans la paroi (2) d'étanchéité, **caractérisée en ce que** le circuit (8) de transfert de gaz comprend un adsorbant (16) ou séparateur pour purifier le gaz transféré vers le réservoir (7) d'éventuels pollutions notamment d'espèce(s) chimique(s) provenant du liquide contenu dans le stockage (3) source.

2. Station selon la revendication 1, **caractérisée en ce que** le circuit (12, 13) de transfert de liquide comprend un réservoir (6) de liquide et une pompe (11) agencés pour transférer du liquide du réservoir (6) de liquide vers le stockage (3) source.

3. Station selon la revendication 1 ou 2, **caractérisée en ce que** le circuit (12, 13) de transfert de liquide comprend une conduite (12) de sortie munie d'un système de vanne(s) (14, 15) et reliée d'une part au stockage (3) source et, d'autre part, au réservoir (6) de liquide, pour évacuer du liquide et éventuellement du gaz du stockage (3) vers le réservoir (6) de liquide.

4. Station selon la revendication 3, **caractérisée en ce que** la conduite (12) de sortie comprend au moins une vanne (14, 15) et notamment un régulateur (15) de pression formant un système d'évent et de maintien d'un différentiel de pression déterminé entre le réservoir (6) de liquide et le stockage (3) source.

5. Station selon l'une quelconque des revendications 3 ou 4 **caractérisée en ce que** le circuit (12, 13) de transfert de liquide comprend une première conduite (13) munie d'une pompe (11) pour transférer le liquide du réservoir (6) de liquide vers le stockage (3) et une seconde conduite constituée par la conduite (12) de sortie.

6. Station selon l'une quelconque des revendications 3 à 5 **caractérisée en ce que** la conduite (12) de sortie comprend une première vanne (14) en série avec une régulateur de pression ou un clapet de surpression.

7. Station selon l'une quelconque des revendications 1 à 6, **caractérisée en ce que** la paroi (2) d'étanchéité délimite dans le stockage (3) source un volume de stockage pour du gaz carburant compris entre 0,08 et 0,6m³ et de préférence compris entre 0,08m³ et 0,30m³.

8. Station selon l'une quelconque des revendications 1 à 7, **caractérisée en ce que** le liquide transféré par le circuit (12, 13) de transfert de liquide est au moins l'un parmi : de l'eau, de l'eau additionnée d'un composant antigel, de l'huile (notamment minérale ou silicone).

9. Station selon l'une quelconque des revendications 1 à 8, **caractérisée en ce qu'**elle comprend un compresseur (18) ou respectivement une pompe associée à un vaporiseur, relié au circuit (8) de transfert de gaz et en particulier au stockage (3) source, pour permettre le remplissage du stockage (3) source en gaz à partir d'une source (170) de gaz carburant, respectivement à partir d'une source de gaz carburant liquéfié, reliée audit compresseur (18).

10. Station selon l'une quelconque des revendications 1 à 9, **caractérisée en ce qu'**elle comprend plusieurs stockages (3) source de gaz carburant raccordés en parallèle à la première extrémité amont du circuit (8) de transfert de gaz via un système de vannes (9) respectives, les stockages (3) source comprenant chacun une paroi extérieure rigide et une paroi (2) d'étanchéité souple agencée à l'intérieur du volume délimité par la paroi extérieure rigide, la paroi (2) d'étanchéité de chaque stockage (3) délimitant un volume de stockage pour gaz carburant relié à la première extrémité du circuit (8) de transfert de gaz, le volume situé entre la paroi souple (2) et la paroi extérieure de chacun des stockages (3) source étant relié à un circuit (12, 13) de transfert de liquide dans le stockage (3) source pour remplir ou soutirer du liquide dans les stockages (3) et contrôler la pression dans les stockage (3) lors du remplissage et/ou du soutirage de gaz dans la paroi (2) d'étanchéité des stockages (3).

11. Procédé de remplissage d'un réservoir (7) avec un gaz carburant sous pression, notamment de l'hydrogène, au moyen d'une station de remplissage comprenant au moins un stockage (3) source de gaz carburant et un circuit (8) de transfert de gaz ayant une première extrémité amont reliée au stockage (3) source et une seconde extrémité reliée fluidiquement au réservoir (7) à remplir, le circuit (8) de transfert de gaz comprenant au moins une vanne (9, 10) de contrôle du transfert de gaz du stockage (3) source vers le réservoir (7), le au moins un stockage (3) source comprenant une paroi extérieure rigide et une paroi (2) souple d'étanchéité agencée à l'intérieur du volume délimité par la paroi extérieure rigide, la paroi (2) d'étanchéité délimitant un volume de stockage pour gaz carburant, la première extrémité amont du circuit (8) étant reliée au volume de stockage délimité par la paroi (2) souple, le volume situé entre la paroi souple (2) et la paroi extérieure étant relié à un circuit (12, 13) de transfert de liquide dans le stockage (3) source pour remplir ou soutirer du liquide dans le stockage (3), le procédé comprenant une étape de contrôle de la pression dans le stockage (3) lors du remplissage et/ou du soutirage de gaz carburant dans la paroi (2) d'étanchéité par injection ou retrait simultané de liquide dans le au moins un stockage (3) source, dans lequel le circuit (8) de transfert de gaz comprend un adsorbant (16) ou séparateur pour purifier le gaz transféré vers le réservoir (7) d'éventuels pollutions notamment d'espèce(s) chimique(s) provenant du liquide contenu dans le stockage (3) source et en ce que le au moins un stockage (3) source contient du gaz carburant à une pression comprise entre 200 et 1000 bar et de préférence entre 300 et 900bar.

12. Procédé selon la revendication 11, **caractérisé en ce qu'**il comporte une étape de transfert de gaz du au moins un stockage (3) source vers le réservoir (7) et **en ce que**, simultanément à ce transfert de gaz, du liquide est injecté dans le au moins un stockage (3) source pour limiter ou empêcher la chute de pression dans ledit stockage (3) source.

13. Procédé selon l'une quelconque des revendications 11 ou 12, **caractérisé en ce qu'**il comporte une étape de remplissage du au moins un stockage (3) source par transfert de gaz à partir d'une source (11) de gaz carburant sous pression et **en ce que** ce que, simultanément à ce transfert de gaz, du liquide est soutiré dans le au moins un stockage (3) source pour limiter ou empêcher l'augmentation de pression dans ledit stockage (3) source.

14. Procédé selon l'une quelconque des revendications 11 à 13 **caractérisée en ce que** le procédé comprend une étape de collecte du gaz de perméation ayant migré au travers de la paroi souple dans le liquide.

15. Procédé selon l'une quelconque des revendications 11 à 14 **caractérisée en ce que** la station comprend un compresseur (18) et **en ce que** le gaz de perméation collecté est injecté au moins en partie à l'entrée (aspiration) du compresseur (18).

## Patentansprüche

1. Station (1) zum Befüllen eines Tanks (7) mit einem unter Druck stehenden Brenngas, insbesondere Wasserstoff, umfassend mindestens einen Quellenspeicher (3) für Brenngas und einen Gastransferkreislauf (8) mit einem stromaufwärtigen ersten Ende, das mit dem(den) Quellenspeicher (n) (3) verbunden ist, und einem stromabwärtigen zweiten Ende, das dazu bestimmt ist, fluidisch mit dem zu befüllenden Tank (7) verbunden zu werden, wobei der Gastransferkreislauf (8) mindestens ein Ventil (9, 10) zum Kontrollieren des Gastransfers vom Quellenspeicher (3) zum Tank umfasst, wobei der mindestens eine Quellenspeicher (3) eine starre Außenwand umfasst und eine flexible Abdichtungswand (2), die im Innern des durch die starre Außenwand begrenzten Volumens angeordnet ist, wobei die flexible Wand (2) ein Speichervolumen für das Brenngas definiert, wobei das stromaufwärtige erste Ende des Kreislaufs (8) mit dem durch die flexible Wand (2) begrenzten Speichervolumen verbunden ist, wobei das zwischen der flexiblen Wand (2) und der Außenwand gelegene Volumen mit einem Flüssigkeitstransferkreislauf (12, 13) zum Transferieren von Flüssigkeit in den Quellenspeicher (3) verbunden ist, um Flüssigkeit in den Quellenspeicher (3) zu füllen oder daraus zu entnehmen und den Druck im Speicher (3) beim Füllen und/oder Entnehmen von Brenngas in der Abdichtungswand (2) zu kontrollieren, **dadurch gekennzeichnet, dass** der Gastransferkreislauf (8) einen Adsorber (16) oder Abscheider umfasst, um das zum Tank (7) transferierte Gas von etwaigen Verunreinigungen zu reinigen, insbesondere von einer oder mehreren chemischen Spezies, die aus der im Quellenspeicher (3) enthaltenen Flüssigkeit stammen.

2. Station nach Anspruch 1, **dadurch gekennzeichnet, dass** der Flüssigkeitstransferkreislauf (12, 13) einen Flüssigkeitstank (6) und eine Pumpe (11) umfasst, die dazu eingerichtet sind, Flüssigkeit vom Flüssigkeitstank (6) zum Quellenspeicher (3) zu transferieren.

3. Station nach Anspruch 1 oder 2, **dadurch gekennzeichnet, dass** der Flüssigkeitstransferkreislauf (12, 13) eine Ausgangsleitung (12) umfasst, die mit einem System aus einem oder mehreren Ventilen (14, 15) versehen ist und zum einen mit dem Quellenspeicher (3) und zum anderen mit dem Flüssigkeitsbehälter (6) verbunden ist, um Flüssigkeit und eventuell Gas vom Speicher (3) zum Flüssigkeitsbehälter (6) abzuführen.

4. Station nach Anspruch 3, **dadurch gekennzeichnet, dass** die Ausgangsleitung (12) mindestens ein Ventil (14, 15) umfasst und insbesondere einen Druckregler (15), der ein System zum Entlüften und Halten einer bestimmten Druckdifferenz zwischen dem Flüssigkeitsbehälter (6) und dem Quellenspeicher (3) bildet.

5. Station nach einem der Ansprüche 3 oder 4, **dadurch gekennzeichnet, dass** der Flüssigkeitstransferkreislauf (12, 13) eine erste Leitung (13) umfasst, die mit einer Pumpe (11) versehen ist, um Flüssigkeit vom Flüssigkeitsbehälter (6) zum Speicher (3) zu transferieren, und eine zweite Leitung, die in der Ausgangsleitung (12) besteht.

6. Station nach einem der Ansprüche 3 bis 5, **dadurch gekennzeichnet, dass** die Ausgangsleitung (12) ein erstes Ventil (14) in Reihe mit einem Druckregler oder einer Überdruckklappe umfasst.

7. Station nach einem der Ansprüche 1 bis 6, **dadurch gekennzeichnet, dass** die Abdichtungswand (2) in dem Quellenspeicher (3) ein Speichervolumen für Brenngas zwischen 0,08 und 0,6 m³ und bevorzugt zwischen 0,08 m³ und 0,30 m³ begrenzt.

8. Station nach einem der Ansprüche 1 bis 7, **dadurch gekennzeichnet, dass** die vom Flüssigkeitstransferkreislauf (12, 13) transferierte Flüssigkeit mindestens eine ist unter: Wasser, Wasser mit zugesetzter Frostschutzkomponente, Öl (insbesondere Mineralöl oder Silikonöl).

9. Station nach einem der Ansprüche 1 bis 8, **dadurch gekennzeichnet, dass** sie einen Kompressor (18) beziehungsweise eine einem Verdampfer zugeordnete Pumpe umfasst, der mit dem Gastransferkreislauf (8) und insbesondere mit dem Quellenspeicher (3) verbunden ist, um das Befüllen des Quellenspeichers (3) mit Gas aus einer Brenngasquelle (170) beziehungsweise aus einer Flüssigbrenngasquelle zu ermöglichen, die mit dem Kompressor (18) verbunden ist.

10. Station nach einem der Ansprüche 1 bis 9, **dadurch gekennzeichnet, dass** sie mehrere Quellenspeicher (3) für Brenngas umfasst, die parallel an das stromaufwärtige erste Ende des Gastransferkreislaufs (8) über ein System aus jeweiligen Ventilen (9) angeschlossen sind, wobei die Quellenspeicher (3) jeweils eine starre Außenwand umfassen und eine flexible Abdichtungsinnenwand (2), die im Innern des durch die starre Außenwand begrenzten Volumens angeordnet ist, wobei die Abdichtungswand (2) jedes Speichers (3) ein Speichervolumen für Brenngas begrenzt, das mit dem ersten Ende des Gastransferkreislaufs (8) verbunden ist, wobei das zwischen der flexiblen Wand (2) und der Außenwand jedes der Quellenspeicher (3) gelegene Volumen mit einem Flüssigkeitstransferkreislauf (12, 13) zum Transferieren von Flüssigkeit in den Quellenspeicher (3) verbunden ist, um Flüssigkeit in die Speicher (3) zu füllen oder daraus zu entnehmen und den Druck in den Speichern (3) beim Füllen und/oder Entnehmen von Gas in der Abdichtungswand (2) der Speicher (3) zu kontrollieren.

11. Verfahren zum Befüllen eines Tanks (7) mit einem unter Druck stehenden Brenngas, insbesondere Wasserstoff, mittels einer Befüllstation, die mindestens einen Quellenspeicher (3) für Brenngas umfasst und einen Gastransferkreislauf (8) mit einem stromaufwärtigen ersten Ende, das mit dem Quellenspeicher (3) verbunden ist, und einem zweiten Ende, das fluidisch mit dem zu befüllenden Tank (7) verbunden ist, wobei der Gastransferkreislauf (8) mindestens ein Ventil (9, 10) zum Kontrollieren des Gastransfers vom Quellenspeicher (3) zum Tank (7) umfasst, wobei der mindestens eine Quellenspeicher (3) eine starre Außenwand umfasst und eine flexible Abdichtungswand (2), die im Innern des durch die starre Außenwand begrenzten Volumens angeordnet ist, wobei die Abdichtungswand (2) ein Speichervolumen für Brenngas definiert, wobei das stromaufwärtige erste Ende des Kreislaufs (8) mit dem durch die flexible Wand (2) begrenzten Speichervolumen verbunden ist, wobei das zwischen der flexiblen Wand (2) und der Außenwand gelegene Volumen mit einem Flüssigkeitstransferkreislauf (12, 13) zum Transferieren von Flüssigkeit in den Quellenspeicher (3) verbunden ist, um Flüssigkeit in den Quellenspeicher (3) zu füllen oder daraus zu entnehmen, wobei das Verfahren einen Schritt des Kontrollierens des Drucks in dem Speicher (3) beim Füllen und/oder Entnehmen von Brenngas in der Abdichtungswand (2) durch gleichzeitiges Einleiten oder Abziehen von Flüssigkeit in den oder aus dem mindestens einen Quellenspeicher (3) umfasst, wobei der Gastransferkreislauf (8) einen Adsorber (16) oder Abscheider umfasst, um das zum Tank (7) transferierte Gas von etwaigen Verunreinigungen zu reinigen, insbesondere von einer oder mehreren chemischen Spezies, die aus der im Quellenspeicher (3) enthaltenen Flüssigkeit stammen, und dadurch, dass der mindestens eine Quellenspeicher (3) Brenngas mit einem Druck zwischen 200 und 1000 bar und bevorzugt zwischen 300 und 900 bar enthält.

12. Verfahren nach Anspruch 11, **dadurch gekennzeichnet, dass** es einen Schritt des Transferierens von Gas von dem mindestens einen Quellenspeicher (3) zu dem Tank (7) beinhaltet und dass, gleichzeitig zu diesem Gastransfer, Flüssigkeit in den mindestens einen Quellenspeicher (3) eingeleitet wird, um den Druckabfall in dem Quellenspeicher (3) zu begrenzen oder zu verhindern.

13. Verfahren nach einem der Ansprüche 11 oder 12, **dadurch gekennzeichnet, dass** es einen Schritt des Befüllens des mindestens einen Quellenspeichers (3) durch Transferieren von Gas aus einer unter Druck stehenden Brenngasquelle (11) beinhaltet und dass, gleichzeitig zu diesem Gastransfer, Flüssigkeit aus dem mindestens einen Quellenspeicher (3) entnommen wird, um den Druckanstieg in dem Quellenspeicher (3) zu begrenzen oder zu verhindern.

14. Verfahren nach einem der Ansprüche 11 bis 13, **dadurch gekennzeichnet, dass** das Verfahren einen Schritt des Sammelns des Permeationsgases umfasst, das durch die flexible Wand hindurch in die Flüssigkeit gewandert ist.

15. Verfahren nach einem der Ansprüche 11 bis 14, **dadurch gekennzeichnet, dass** die Station einen Kompressor (18) umfasst und dass das gesammelte Permeationsgas zumindest teilweise in den Einlass (Ansaugung) des Kompressors (18) eingeleitet wird.

## Claims

1. Station (1) for filling a tank (7) with a pressurized fuel gas, notably hydrogen, including at least one fuel gas source store (3) and a gas transfer circuit (8) having an upstream first end connected to the source store(s) (3) and a downstream second end intended to be in fluid communication with the tank (7) to be filled, the gas transfer circuit (8) including at least one valve (9, 10) for controlling the transfer of gas from the source store (3) to the tank, the at least one source store (3) including a rigid outer wall and a flexible sealing wall (2) that is arranged inside the space delimited by the rigid outer wall, the flexible wall (2) defining a storage space for the fuel gas, the upstream first end of the circuit (8) being connected to the storage space defined by the flexible wall (2), the space located between the flexible wall (2) and the outer wall being connected to a circuit (12, 13) for transferring liquid into the source store (3), in order to fill or extract the liquid in the source store (3) and to control the pressure in the store (3) when filling and/or extracting fuel gas inside the sealing wall (2), **characterized in that** the gas transfer circuit (8) includes an adsorbant (16) or separator for purifying the gas transferred to the tank (7) of any pollution notably chemical species originating from the liquid contained in the source store (3).

2. Station according to Claim 1, **characterized in that** the liquid transfer circuit (12, 13) includes a liquid tank (6) and a pump (11) adapted to transfer liquid from the liquid tank (6) to the source store (3).

3. Station according to Claim 1 or 2, **characterized in that** the liquid transfer circuit (12, 13) includes an outlet pipe (12) including a system of valve(s) (14, 15) and connected on the one hand to the source store (3) and on the other hand to the liquid container (6) to evacuate liquid and where applicable gas from the store (3) to the liquid container (6).

4. Station according to Claim 3, **characterized in that** the outlet pipe (12) includes at least one valve (14, 15) and notably a pressure regulator (15) forming a venting system for maintaining a particular pressure difference between the liquid container (6) and the source store (3) .

5. Station according to either one of Claims 3 or 4 **characterized in that** the liquid transfer circuit (12, 13) includes a first pipe (13) provided with a pump (11) for transferring the liquid from the liquid container (6) to the store (3) and a second pipe consisting of the outlet pipe (12).

6. Station according to any one of Claims 3 to 5 **characterized in that** the outlet pipe (12) includes a first valve (14) in series with a pressure regulator or a pressure relief valve.

7. Station according to any one of Claims 1 to 6, **characterized in that** the sealing wall (2) defines in the source store (3) a storage space for fuel gas between 0.08 and 0.6 m3 inclusive and preferably between 0.08 m3 and 0.30 m3 inclusive.

8. Station according to any one of Claims 1 to 7, **characterized in that** the liquid transferred by the liquid transfer circuit (12, 13) is at least one of the following: water, water to which an antifreeze compound has been added, oil (notably mineral or silicone oil).

9. Station according to any one of Claims 1 to 8, **characterized in that** it includes a compressor (18) or respectively a pump associated with an evaporator, connected to the gas transfer circuit (8) and in particular to the source store (3), to enable the filling of the source store (3) with gas from a fuel gas source (170), respectively from a liquefied fuel gas source, connected to said compressor (18).

10. Station according to any one of Claims 1 to 9, **characterized in that** it includes a plurality of fuel gas source stores (3) connected in parallel to the upstream first end of the gas transfer circuit (8) via a system of respective valves (9), the source stores (3) each including a rigid outer wall and a flexible sealing wall (2) arranged inside the space defined by the rigid outer wall, the sealing wall (2) of each store (3) defining a fuel gas storage space connected to the first end of the gas transfer circuit (8), the space located between the flexible wall (2) and the outer wall of each of the source stores (3) being connected to a circuit (12, 13) for transferring liquid into the source store (3) to fill or extract liquid in the stores (3) and to control the pressure in the stores (3) when filling and/or extracting gas inside the sealing wall (2) of the stores (3).

11. Method of filling a tank (7) with a pressurized fuel gas, notably hydrogen, by means of a filling station including at least one fuel gas source store (3) and a gas transfer circuit (8) having an upstream first end connected to the source store (3) and a second end in fluid communication with the tank (7) to be filled, the gas transfer circuit (8) including at least one valve (9, 10) for controlling the transfer of gas from the source store (3) to the tank (7), the at least one source store (3) including a rigid outer wall and a flexible sealing wall (2) that is arranged inside the space defined by the rigid outer wall, the sealing wall (2) defining a storage space for fuel gas, the upstream first end of the circuit (8) being connected to the storage space defined by the flexible wall (2), the space located between the flexible wall (2) and the outer wall being connected to a circuit (12, 13) for transferring liquid in the source store (3) to fill or extract liquid in the store (3), the method including a step of monitoring the pressure in the store (3) when filling and/or extracting fuel gas inside the sealing wall (2) by simultaneous injection or removal of liquid in the at least one source store (3), wherein the gas transfer circuit (8) includes an adsorbant (16) or separator for purifying the gas transferred to the tank (7) of any pollution notably of chemical compound(s) originating from the liquid contained in the source store (3) and in that the at least one source store (3) contains fuel gas at a pressure between 200 and 1000 bar inclusive and preferably between 300 and 900 bar inclusive.

12. Method according to Claim 11, **characterized in that** it includes a step of transfer of gas from the at least one source store (3) to the tank (7) and **in that**, simultaneously with this transfer of gas, liquid is injected into the at least one source store (3) to limit or prevent the pressure drop in said source store (3).

13. Method according to either one of Claims 11 or 12, **characterized in that** it includes a step of filling the at least one source store (3) by transfer of gas from a source (11) of pressurized fuel gas and **in that**, simultaneously with this transfer of gas, liquid is extracted in the at least one source store (3) to limit or prevent the pressure rise in said source store (3).

14. Method according to any one of Claims 11 to 13 **characterized in that** the method includes a step of collecting permeation gas having migrated through the flexible wall into the liquid.

15. Method according to any one of Claims 11 to 14 **characterized in that** the station includes a compressor (18) and **in that** the collected permeation gas is injected at least in part at the inlet (suction) of the compressor (18) .
